# EUROPEAN PATENT SPECIFICATION

(11) **EP 1 440 535 B1**
(45) Date of publication and mention of the grant of the patent: **05.01.2011**
(21) Application number: 02762711.6
(22) Date of filing: 09.09.2002
(51) Int. Cl.: H04L 9/32, H04L 9/06

(54) **Memory encrytion system and method**
Verfahren und System zur Speicherverschlüsselung
Cryptage de mémoire

(30) Priority: 03.10.2001 EP 01203740
(43) Date of publication of application: 28.07.2004
(73) Proprietor: NXP B.V., 5656 AG Eindhoven (NL)
(72) Inventor: VAN RIJNSWOU, Sander, M., NL-5656 AA Eindhoven (NL)
(74) Representative: Williamson, Paul Lewis
(86) International application number: PCT/IB2002/003692
(87) International publication number: WO 2003/030441

(56) References cited:
- EP-A- 1 063 812
- BRUCE SCHNEIER: "Applied Cryptography Second Edition" , JOHN WILEY & SONS, INC. , USA XP002234469 * page 220 - page 222 * page 270 -page 277
- GOLIC^1 J D: "How to Construct Cryptographic Primitives from Stream Ciphers" COMPUTERS & SECURITY. INTERNATIONAL JOURNAL DEVOTED TO THE STUDY OF TECHNICAL AND FINANCIAL ASPECTS OF COMPUTER SECURITY, ELSEVIER SCIENCE PUBLISHERS. AMSTERDAM, NL, vol. 20, no. 1, 31 January 2001 (2001-01-31), pages 79-89, XP004234378 ISSN: 0167-4048

## Description

The invention relates to encrypting/decrypting data words for secure storage in a memory, where the data words are identified by respective addresses.

Cryptography is becoming increasingly important. Main areas are content encryption/decryption and access management functions. It is important to protect the entire supply chain, including the transmission via a network or supply on a storage medium, like a CD, as well as the actual use of the content in a rendering device. This also implies that storage of the data in a solid state random access memory of a rendering device or smart card also needs to be protected. In principle, encryption based on block ciphers can be used for such protection. Cryptographically strong block ciphers encrypt more than one component (typically a component is a byte) of a word at a time. Such a word is usually referred to as a block, hence the name block cipher. For example, DES encrypts 8 bytes together, AES encrypts 16 bytes together. Even a very small block cipher might still encrypt 4 bytes in one block. Encrypting several bytes together is necessary since it makes the number of possible codebook words much larger and it flattens the statistical distribution. DES is one of the most well-known block ciphers and uses sixteen cryptographic rounds. By using DES in the ECB mode (Electronic Code Book mode) each plaintext word of eight bytes is encrypted separately giving an encrypted eight byte word.

At application level, e.g. for rendering data, many simple devices operate on one byte at a time. Using a block cipher in the conventional ECB mode has a disadvantage for such systems. A change to one of the bytes of a word results in a change to all bytes of the encrypted word. It is therefore not directly possible to change only one of the bytes of the encrypted word. It is necessary to first retrieve all other bytes of the word in plain text form. For an 8-byte block cipher, this implies that changing one of the bytes involves reading the corresponding encrypted eight byte word from the memory, decrypting the word, changing one of the eight bytes and re-encrypting the updated word. For DES this involves thirty-two time consuming cryptographic rounds. As a result, access to encrypted memory is significantly slower than access to unencrypted memory. This is particularly a problem for consumer electronics devices where price pressure makes it difficult to overcome or reduce the additional delay by means of additional hardware. Moreover, it is also desired to keep the power consumption low. Therefore, for applications requiring a fast memory access the number of rounds may need to be reduced, resulting in a weaker protection.

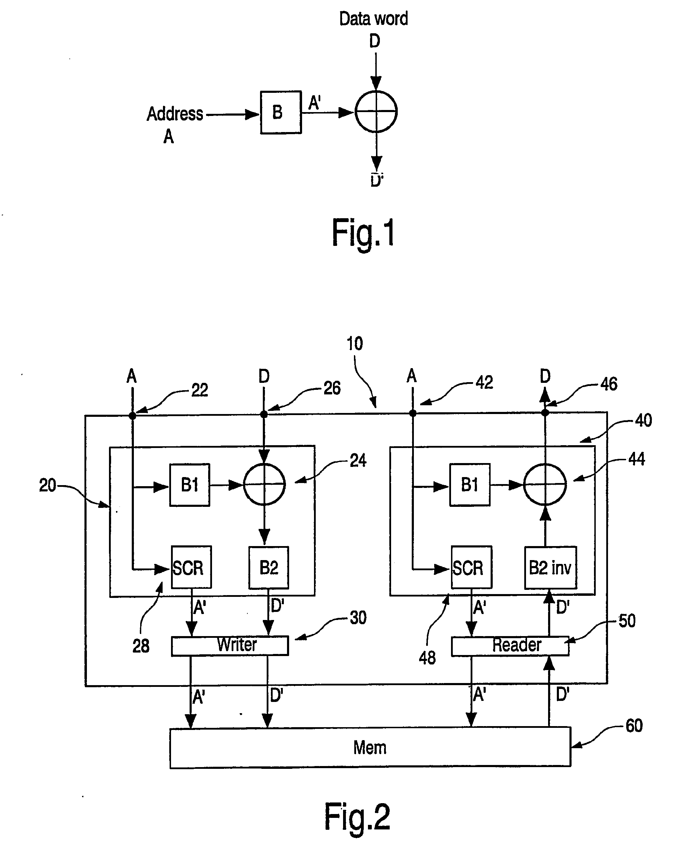

It is known to perform memory encryption using a block cipher in the so-called counter mode (CTR), for example as disclosed by Diffie & Hellman in "Privacy and Authentication: An Introduction to Cryptography", Proceedings of the IEEE, 67 (1979), pp. 397-427. This is illustrated in Figure 1. Each word D is identified by a respective address A. The address A is encrypted using a block cipher B in ECB mode into an encrypted address A' = B(A). The data word D is combined with the encrypted address A' to give the encrypted word D'. The combination is performed using an XOR function: D' = XOR(D, B(A)). Instead of a block cipher in ECB mode also other suitable one way functions (hash) may be used. Since the address identifies all components (such as bytes) of the word, the hashed address is valid for all components. A change of one component can be effected by recalculating the encrypted address A' = B(A), retrieving the original data word (D = XOR(D', B(A)), changing the component of the word which gives a new plain text word Dl, and recombining Dl with the encrypted address (Dl'= XOR(Dl, B(A)). In this scheme only one encryption step takes place (for DES, requiring 16 rounds). However, it is known that the CTR mode is cryptographically weak when it is used for encryption of random access memory. Whereas normally for a four byte word for a brute force attack a total of 256⁴ pairs of words and their encrypted counter parts need to be collected, here individual bytes can be attacked. Consequently, the system can be broken by collecting only 4 * 256 pairs.

Bruce Schneier in "Applied Cryptography" second edition, John Wiley & Sons Inc., USA, XP002234469 discloses methods for providing random access to an encrypted drive, in which a sector address is used to generate a unique independent variable (IV) for each sector being encrypted or decrypted. Encryption of a sector may be performed by an XOR operation on the sector data with the sector address IV, followed by normal encryption using a block cipher.

Menezes, Vanstone & Oorschot in "Handbook of Applied Cryptography", CRC Press LLC, USA, USA, pp. 234-235, disclose cascades of ciphers and multiple encryption through concatenation of 2 or more block ciphers, each with independent keys.

It is an obj ect of the invention to provide a memory encryption architecture that enables fast access while maintaining adequate security. It is a further obj ect that such an architecture can be efficiently implemented in hardware and software allowing a broad use in consumer electronic applications.

According to the invention there is provided a system for storing words in an encrypted form in a memory, an encryptor and a decryptor for use in such a system and respective methods and computer program products, as defined in the appended claims.

A hash function is used to scramble the address and the combination of the scrambled address and data word is encrypted further using a block cipher. This last step overcomes the weakness of the CTR mode memory encryption. By using a two step encryption (address hashing and encryption of the combination), the encryption strength of the last permutation can be reduced, so that much of the speed advantage of the CTR mode can be maintained

According to the measure of the dependent claim 2, the architecture enables a parallel arrangement of the two cryptographic steps for reading. This increases the speed of memory access. It is a further advantage that the read speed can be increased since in many systems processing may need to be halted until the data is read, whereas processing can be continued during the writing that occurs in the background.

The same block cipher rounds are used for both the address hashing and the scrambling of the data with the hashed address. This has the advantage that only one cryptographic function needs to be implemented

The default number of rounds of the predetermined block cipher (e.g. DES uses 16 rounds) may be divided over the hashing of the address and the encryption of the combination of the hashed addresses and the data word. As such the total number of rounds can be kept the same as used in the CTR mode of memory encryption, while increasing the cryptographic strength compared to CTR.

Both operations of hashing of the address and the encrypting of the combination of the hashed addresses and the data word may use at least 3 rounds, ensuring a reasonable level of permutation.

In a preferred embodiment both operations use the same number of rounds. This particularly makes a parallel operation optimally fast.

According to the measure of dependent claim 6, the architecture-enables fast updating of one or more components of a word, where the entire word is not available in plain text form.

These and other aspects of the invention will be apparent from and elucidated with reference to the embodiments shown in the drawings.
Figure 1 shows the prior art CTR memory encryption architecture; and
Figure 2 illustrates the memory encryption architecture according to the invention.
Fig. 2 shows the cryptographic system according to the invention. The system includes a cryptographic unit 10 with an encryptor 20 and a decryptor 40. The unit 10 is typically connected to a direct access memory 60 for storing data in a secure way. It will be appreciated that with data also programs (i.e. computer instructions in any form, such as executable code) is meant. In the description it is assumed that the memory is of a read and write type. However, the system can also be used for reading only. Preferably the cryptographic unit 10 is implemented in a secure module to reduce the chance of tampering.

The encryptor 20 receives via an input 26 from a processing unit a data word D that consists of a plurality of components. Typically a component is a byte, but other sizes such as nibbles or 16-bit components may also be used. The encryptor 20 also receives an address A via the input 22 identifying the storage location(s) of the word in the memory 60. Preferably, the processing unit that supplies the word D and address A is also incorporated in the same secure module. The encryptor 20 includes a hashing function B1 for converting the address to a hashed address B 1 (A). Preferably, the hashing function B1 is a keyed hash function implemented in the form of rounds of a block cipher. DES or TEA are well-known and suitable ciphers to be used in the system according to the invention. The encryptor 20 also includes a combiner 24 for combining the hashed address B1(A) with the received word D. Preferably, the combiner 24 is implemented as a bit-wise XOR (exclusive OR) function. This gives an intermediate result of XOR(D, B 1 (A)). The output of the combiner 24 is fed through a block cipher B2 of the encryptor 20 giving the encrypted word D'. A writer 30 writes the encrypted word D' to the memory under control of the address A. The writing may be under direct control of the address A. However, particularly if the memory 60 is outside the secure module, it is preferred that the encryptor includes an additional scrambling function 28 for scrambling the address A to a scrambled address A' that is used for accessing the memory 60. The scrambled address A' is then supplied to the writer 30 instead of the address A. The scrambling function should not be the same as the hash function B1 to ensure that no information leaks from the secure module. It will be appreciated that normally the address will identify the individual component of the word. A word address can usually be derived in a simple way from the component address (e.g. by ignoring the two least significant bits of a byte-level address, where there are four bytes in a word).

The decryptor 40 performs an inverse operation of the encryptor 20. Via an input 42 the decryptor 40 receives an address A from a processing unit. The decryptor optionally includes a scrambling function 48 for scrambling the address A to address A' that is used for accessing the memory 60. The scrambling function 48 is the same as the scrambling function 28 of the encryptor 20. A reader 50 reads an encrypted word D' from the memory 60 under control of the address A (or optionally the scrambled address A'). The encrypted word D' is fed through a decryptor B2⁻¹ that is the inverse of B2. For many block ciphers, such as Feistel block ciphers, the rounds of the inverse cipher are the same as the rounds of the encrypting cipher, where the round keys are supplied in reverse order. The address A is fed through the same hashing function B1 as used by the encryptor 20 for converting the address into a hashed address B1(A). A decomposer 44 is used to extract the plaintext word D from the partially decrypted word B2⁻¹(D') using the hashed address B1(A). In a preferred embodiment the XOR function 24 is mirrored in also using an XOR function for the decomposer 44. The decomposition is then: D = XOR(B2⁻¹(D'), B1(A)). D is supplied to a processing unit via an output 46.

The processing unit typically also supplies the key(s) for the cryptographic functions B1 and B2 to the encryptor/decryptor.

It will be appreciated that in a system wherein encrypting and decryption occurs time-sequential, the corresponding operations of the encryptor and decryptor need only be implemented once. In particular, B1 and B2 use cryptographic rounds of the same block cipher. If B2 is its own inverse (with round keys supplied in reverse order), only one round function needs to be implemented to support both the encryption and the decryption.

In a preferred embodiment, the decryptor 40 performs the inverse operation B2⁻¹ and the address hashing B1 in parallel. If B2⁻¹ and B1 are based on the same round function this does imply that such a function needs to be implemented twice, but it reduces the time required for decryption.

Preferably, the hash function B1 uses *k* rounds of a predetermined block cipher with a default number of *n* rounds (*k<n*) and the block cipher of the encryptor (B1) uses *n-k* rounds of the predetermined block cipher. In this way the *n* rounds are divided over the B1 operation of hashing the address and the B2 (or for reading, the B2⁻¹ operation) of encrypting the intermediate result XOR(D, B1(A)). While maintaining an adequate strength, reading can be performed fast using the described parallel arrangement. In the parallel arrangement, reading requires a time to perform max(*k*, *n-k*) rounds, while in the conventional system this takes *n* rounds. Particularly if *n* = *k* the parallel arrangement halves the amount of computing time and thus can also significantly reduce the power consumption (or enables raising the security by using more rounds while maintaining a similar level of power consumption).

For the hashing of the address effected by B1 and the encryption effected by B2 to be reasonably strong it is preferred that *k* >= 3 and *n-k* >=3 for conventional block ciphers, such as DES, that typically use 16 rounds in total. It will be appreciated that although there are good cryptographic reasons to use at least 3 rounds with existing block ciphers, in general as many rounds should be used that ensures a reasonable level of scrambling with the particular block cipher in question.

In a preferred embodiment, the address hashing B1 and the encryption/decryption B2 use the same number of rounds (*n* = *k*). In addition to balancing the cryptographic strength over two parts, this optimizes the read speed as described above.

Using the architecture according to the invention, enables a quick updating of individual components, such as nibbles, bytes or 16 bit parts, of a larger composite word (block). As an example, assume that a word D consists of four components d₀ to d₃ and that components d₀ needs to be updated. First the address A of word D is loaded (usually provided by the processing unit). Next, the reader 50 is used to read the corresponding encrypted word D' from a memory under control of the address A associated with the word. If the optional address scrambling is used, the address scrambler 48 is used to produce the scrambled address A' used for accessing the memory 60. Next the hash function B1 is used to convert the address A of the word into a hashed address B1(A). The block cipher B2⁻¹ decrypts the encrypted word D' to the intermediate form. As described earlier, for these read activities, B1 and B2⁻¹ are preferably executed in parallel. Now the ingredients (B1(A), B2⁻¹(D'), and d₀) are all available to form an updated intermediate result. This updating is performed by a component updater that combines the new component value (d₀') with the decrypted encrypted word (B2⁻¹(D')) under control of the hashed address (B1(A)), forming an updated combined word/hashed address. This component updater is not shown in the figures. In the preferred embodiment, the composition 24 is performed by an XOR operation. For such a system, the updating of component d₀ can be performed by extracting the least significant component from the hashed address B1(A) and combining this with the new value do' using a component wide XOR function. The resulting combined component value is then loaded in the least significant component location of B2⁻¹(D'). After such a component updating has been completed, the block cipher B2 is used to encrypt the updated combined word/hashed address into an updated encrypted word. This word is then written to the memory 60 using the writer 30. If the optional address scrambling was used, the same scrambled address that initially was used to read the word can now be used again to write the updated word.

It will be appreciated that the memory encryption is preferably implemented using a dedicated encryption/decryption device. The described cryptographic operations may be implemented in dedicated hardware or performed by a cryptographic processor. The processor may be based on a conventional processor core but may also be based on a dedicated cryptographic processing core with instructions optimized for cryptographic operations. The processor is usually operated under control of a suitable program (firmware) to perform the steps of the algorithm according to the invention. It is preferred that such a computer program product is embedded in a secure way in the memory encryption system according to the invention. If desired, it may also be loaded from a background storage, such as a harddisk or ROM, where preferably the program is cryptographically protected (e.g. using DES) against malicious users. The computer program product can be stored on the background storage after having been distributed on a storage medium, like a CD-ROM, or via a network, like the public Internet. Sensitive information, like an encryption key, is preferably distributed and stored in a secure way. Techniques for doing so are generally known and not described further. The cryptographic system may, in part or in whole, be implemented on a smart-card.

## Claims

1. A system (10) for storing data words in an encrypted form in a memory (60), the data words being identified by respective associated addresses; the system including:
- an encryptor (20) for encrypting a data word (D) using the associated address (A); the encryptor including:
- means to perform a hash function (B1) for converting the associated address (A) into a hashed address,
- a combiner (24) for combining the data word (D) with the hashed address, and
- a block cipher (B2) for encrypting the combined word/hashed address into an encrypted word (D');
- a writer (30) for writing the encrypted word (D') to the memory (60) at a location identified by the associated address;
- a reader (50) for reading an encrypted word (D') from a memory (60) at a location identified by an address (A) associated with the word;
- a decryptor (40) for decrypting the read encrypted word (D') using the associated address (A); the decryptor including:
- means to perform a hash function (B1) for converting the associated address (A) into a hashed address; the hash function being the same as used by the encryptor;
- a block cipher for decrypting the encrypted word (D'); the block cipher being an inverse of the block cipher (B2) of the encryptor (20); and
- a decomposer (44) for retrieving a data word (D) by combining the decrypted encrypted word with the hashed address,
wherein the means to perform a hash function (B1) and the block cipher (B2) of the encryptor (20) are configured to use rounds of a same predetermined block cipher.

2. A system as claimed in claim 1, wherein in the decryptor (40) the means to perform the hash function (B1) and the block cipher (B2) are arranged in parallel.

3. A system as claimed in claim 1, wherein the predetermined block cipher has a default number of *n* rounds; the hash function being arranged to use *k* rounds of the predetermined block cipher, where *l*<=*k*<*n*, and the block cipher of the encryptor uses *n-k* rounds of the predetermined block cipher.

4. A system as claimed in claim 3, wherein *k*>=3 and *n*-*k*>=3.

5. A system as claimed in claim 3, wherein *n* = *k.*

6. A system as claimed in claim 1, wherein the data word includes a plurality of components, the system being operative to update a component of the data word (D) to a new component value by:
- the reader (50) being adapted to read an encrypted word (D') from a memory (60) at a location identified by an address (A) associated with the data word (D);
- the means to perform a hash function (B1) being adapted to convert the associated address (A) into a hashed address;
- the block cipher of the decryptor (20) being adapted to decrypt the encrypted word (D');
- a component updater being adapted to combine the new component value with the decrypted encrypted word identified by the hashed address, forming an updated combined word/hashed address; and
- using the block cipher (B2) of the encryptor (20) being adapted to encrypt the updated combined word/hashed address into an updated encrypted word.

7. An encryptor (20) for use in a system for storing data words in an encrypted form in a memory (60) as claimed in claim 1 wherein each data word is identified by a respective associated address; the encryptor including:
- means to perform a hash function (B1) for converting an address (A) associated with a data word (D) into a hashed address,
- a combiner (24) for combining the data word (D) with the hashed address, and
- a block cipher (B2) for encrypting the combined word/hashed address into an encrypted word (D'),
wherein the means to perform a hash function (B1) and the block cipher (B2) are configured to use rounds of a same predetermined block cipher.

8. A decryptor (40) for use in a system wherein data words are stored in an encrypted form in a memory (60) as claimed in claim 1; wherein each data word is identified by a respective associated address; the decryptor including:
- means to perform a hash function (B1) for converting an address (A) associated with a data word in the memory into a hashed address;
- a block cipher (B2 inv) for decrypting on encrypted word (D') that has been read from the memory (60) at a location identified by the associated address (A); and
- a decomposer (44) for retrieving a plaintext data word (D) by combining the decrypted encrypted word with the hashed address,
wherein the means to perform a hash function (B1) and the block cipher (B2 inv) are configured to use rounds of a same predetermined block cipher.

9. A method of encrypting data words for storage in a memory (60) in an encrypted form, wherein each data word is identified by a respective associated address; the method including:
- using a hash function (B 1) to convert an address (A) associated with a data word (D) into a hashed address,
- combining the data word (D) with the hashed address, and
- using a block cipher (B2) to encrypt the combined word/hashed address into an encrypted word (D') for subsequent storage in the memory (60), wherein the hash function (B 1) and the block cipher (B2) use rounds of a same predetermined block cipher.

10. A method of decrypting data words stored in a memory (60) in an encrypted form, wherein each data word is identified by a respective associated address; the method including:
- using a hash function (B1) to convert an address (A) associated with an encrypted data word (D') stored in the memory into a hashed address;
- using a block cipher (B2 inv) to decrypt the encrypted data word read from the memory at a location identified by the associated address(A) to an intermediate form; and
- retrieving a plaintext data word (D) by combining the intermediate form with the hashed address,
wherein the hash function (B1) and the block cipher (B2 inv) use rounds of a same predetermined block cipher.

11. A computer program product where the program product is operative to cause a processor to perform the method of claim 9.

12. A computer program product where the program product is operative to cause a processor to perform the method of claim 10.

## Patentansprüche

1. Ein System (10) zum Speichern von Datenworten in einer verschlüsselten Form in einem Speicher (60), wobei die Datenworte identifiziert sind durch entsprechende zugeordnete Adressen; das System enthaltend:
- einen Verschlüsseler (20) zum Verschlüsseln eines Datenwortes (D) unter Verwendung der zugeordneten Adresse (A); der Entschlüsseler enthaltend:
- Mittel zum Durchführen einer Hash-Funktion (B1) zum Konvertieren der zugeordneten Adresse (A) in eine gehashte Adresse,
- einen Kombinierer (24) zum Kombinieren des Datenwortes (D) mit der gehashten Adresse, und
- einen Blockcode (B2) zum Verschlüsseln des kombinierten Wortes/gehashten Adresse in ein verschlüsseltes Wort (D');
- einen Schreiber (30) zum Schreiben des verschlüsselten Wortes (D') in den Speicher (60) an einer Stelle, die durch die zugeordnete Adresse identifiziert ist;
- einen Leser (50) zum Lesen eines verschlüsselten Wortes (D') aus einem Speicher (60) an einer Stelle, die identifiziert ist durch eine Adresse (A), die dem Wort zugeordnet ist;
- einen Entschlüsseler (40) zum Entschlüsseln des gelesenen verschlüsselten Wortes (D') unter Verwendung der zugeordneten Adresse (A); der Entschlüsseler enthaltend:
- ein Mittel zum Durchführen einer Hash-Funktion (B1) zum Konvertieren der zugeordneten Adresse (A) in eine gehashte Adresse; wobei die Hash-Funktion dieselbe ist, wie die, die von dem Verschlüsseler verwendet wurde;
- einen Blockcode zum Entschlüsseln des verschlüsselten Wortes (D'); wobei der Blockcode ein Inverses des Blockcodes (B2) des Verschlüsselers (20) ist; und
- einen Zerleger (44) zum wieder Auffinden eines Datenwortes (D) durch Kombinieren des entschlüsselten verschlüsselten Wortes mit der gehashten Adresse,
wobei das Mittel zum Durchführen eine Hash-Funktion (B1) und der Blockcode (B2) des Verschlüsselers (20) konfiguriert sind zum Verwenden von Runden eines selben vorbestimmten Blockcodes.

2. System nach Anspruch 1, wobei in dem Entschlüsseler (40) das Mittel zum Durchführen der Hash-Funktion (B1) und der Blockcode (B2) parallel angeordnet sind.

3. System nach Anspruch 1, wobei der vorbestimmte Blockcode eine Standardanzahl von n Runden hat; die Hash-Funktion eingerichtet ist zum Verwenden von k Runden des vorbestimmten Blockcodes, wobei 1 ≤ k < n, und der Blockcode des Verschlüsselers n-k Runden des vorbestimmten Blockcodes verwendet.

4. System nach Anspruch 3, wobei k ≥ 3 und n-k ≥ 3.

5. System nach Anspruch 3, wobei n = k.

6. System nach Anspruch 1, wobei das Datenwort eine Vielzahl von Komponenten aufweist, und das System betreibbar ist zum Updaten einer Komponente des Datenwortes (D) auf einen neuen Komponentenwert durch:
- den Leser (50), der angepasst ist zum Lesen eines verschlüsselten Wortes (D') aus einem Speicher (60) an einer Stelle, die identifiziert ist durch eine Adresse (A), die mit dem Datenwort (D) assoziiert ist;
- das Mittel zum Durchführen einer Hash-Funktion (B1), das angepasst ist zum Konvertieren der assoziierten Adresse (A) in eine gehashte Adresse;
- den Blockcode des Verschlüsselers (20), der angepasst ist zum Entschlüsseln des verschlüsselten Wortes (D');
- einen Komponentenupdater, welcher angepasst ist zum Kombinieren des neuen Komponentenwertes mit dem entschlüsselten verschlüsselten Wort, das identifiziert ist durch die gehashte Adresse, ein upgedatetes kombiniertes Wort/gehashte Adresse bildend; und
- Verwenden des Blockcodes (B2) des Verschlüsselers (20), der angepasst ist zum Verschlüsseln des upgedateten kombinierten Wortes/gehashten Adresse in ein upgedatetes verschlüsseltes Wort.

7. Einen Verschlüsseler (20) zur Verwendung in einem System zum Speichern von Datenworten in einer verschlüsselten Form in einem Speicher (60) wie in Anspruch 1 beansprucht, wobei jedes Datenwort identifiziert ist durch eine entsprechende assoziierte Adresse; der Verschlüsseler enthaltend:
- Mittel zum Durchführen einer Hash-Funktion (B1) zum Konvertieren einer Adresse (A), die assoziiert ist mit einem Datenwort (D), in eine gehashte Adresse,
- einen Kombinierer (24) zum Kombinieren des Datenwortes (D) mit der gehashten Adresse, und
- einen Blockcode (B2) zum Verschlüsseln des kombinierten Wortes/gehashten Adresse in ein verschlüsseltes Wort (D'),
wobei das Mittel zum Durchführen einer Hash-Funktion (B1) und der Blockcode (B2) konfiguriert sind zum Verwenden von Runden eines selben vorbestimmten Blockcodes.

8. Ein Entschlüsseler (40) zur Verwendung in einem System, worin Datenworte in einer verschlüsselten Form in einem Speicher (60) gespeichert sind, wie in Anspruch 1 beansprucht; wobei jedes Datenwort identifiziert ist durch eine entsprechende assoziierte Adresse; der Entschlüsseler enthaltend:
- Mittel zum Durchführen einer Hash-Funktion (B1) zum Konvertieren einer Adresse (A), die mit einem Datenwort in dem Speicher assoziiert ist, in eine gehashte Adresse;
- einen Blockcode (B2 inv) zum Entschlüsseln eines verschlüsselten Wortes (D'), das von dem Speicher (60) an einer Stelle, die durch die assoziierte Adresse (A) identifiziert ist, gelesen wurde; und
- einen Zerleger (44) zum wieder Auffinden eines Klartextdatenwortes (D) durch Kombinieren des entschlüsselten verschlüsselten Wortes mit der gehashten Adresse,
wobei das Mittel zum Durchführen einer Hash-Funktion (B1) und der Blockcode (B2 inv) konfiguriert sind zum Verwenden von Runden eines selben vorbestimmten Blockcodes.

9. Verfahren zum Verschlüsseln von Datenworten zum Speichern in einem Speicher (60) in einer verschlüsselten Form, wobei jedes Datenwort identifiziert ist durch eine entsprechende assoziierte Adresse; das Verfahren enthaltend:
- Verwenden einer Hash-Funktion (B1) zum Konvertieren einer Adresse (A), die mit einem Datenwort (D) assoziiert ist, in eine gehashte Adresse,
- Kombinieren des Datenwortes (D) mit der gehashten Adresse, und
- Verwenden eines Blockcodes (B2) zum Verschlüsseln des kombinierten Wortes/gehashten Adresse in ein verschlüsseltes Wort (D') zum nachfolgenden Speichern in dem Speicher (60),
wobei die Hash-Funktion (B1) und der Blockcode (B2) Runden eines selben vorbestimmten Blockcodes verwenden.

10. Verfahren des Entschlüsselns von Datenworten, die in einem Speicher (60) in einer verschlüsselten Form gespeichert sind, wobei jedes Datenwort identifiziert ist durch eine entsprechende assoziierte Adresse; das Verfahren enthaltend:
- Verwenden einer Hash-Funktion (B1) zum Konvertieren einer Adresse (A), die assoziiert ist mit einem verschlüsselten Datenwort (D'), das in dem Speicher gespeichert ist, in eine gehashte Adresse;
- Verwenden eines Blockcodes (B2 inv) zum Entschlüsseln des verschlüsselten Datenwortes, welches gelesen wurde von dem Speicher an einer Stelle, die identifiziert ist durch die assoziierte Adresse (A), in eine Zwischenform; und
- wieder Auffinden eines Klartextdatenwortes (D) durch Kombinieren der Zwischenform mit der gehashten Adresse,
wobei die Hash-Funktion (B1) und der Blockcode (B2 inv) Runden eines selben vorbestimmten Blockcodes verwenden.

11. Computerprogrammprodukt, wobei das Programmprodukt betreibbar ist zum Bewirken, dass ein Prozessor das Verfahren nach Anspruch 9 durchführt.

12. Computerprogrammprodukt, wobei das Programmprodukt betreibbar ist, um zu bewirken, dass ein Prozessor das Verfahren nach Anspruch 10 durchführt.

## Revendications

1. Système (10) pour stocker des mots de données sous une forme chiffrée dans une mémoire (60), les mots de données étant identifiés par leurs adresses associées respectives, le système comprenant :
- un dispositif de chiffrement (20) pour chiffrer un mot de données (D) en utilisant l'adresse associée (A), le dispositif de chiffrement comprenant :
- des moyens pour réaliser une fonction de hachage (B1) pour convertir l'adresse associée (A) en une adresse hachée,
- un combineur (24) pour combiner le mot de données (D) avec l'adresse hachée, et
- un dispositif de chiffrement par blocs (B2) pour chiffrer la combinaison mot/adresse hachée en un mot chiffré (D') ;
- un dispositif d'écriture (30) pour écrire le mot chiffré (D') dans la mémoire (60) à un emplacement identifié par l'adresse associée ;
- un dispositif de lecture (50) pour lire un mot chiffré (D') à partir d'une mémoire (60) à un emplacement identifié par une adresse (A) associée avec le mot ;
- un dispositif de déchiffrement (40) pour déchiffrer le mot chiffré lu (D') en utilisant l'adresse associée (A), le dispositif de déchiffrement comprenant :
- des moyens pour réaliser une fonction de hachage (B1) pour convertir l'adresse associée (A) en une adresse hachée, la fonction de hachage étant la même que celle employée par le dispositif de chiffrement ;
- un dispositif de chiffrement par blocs pour déchiffrer le mot chiffré (D'), le chiffrement par blocs étant un inverse du chiffrement par blocs (B2) du dispositif de chiffrement (20) ; et
- un décomposeur (44) pour récupérer un mot de données (D) en combinant le mot chiffré déchiffré avec l'adresse hachée,
dans lequel les moyens pour réaliser une fonction de hachage (B1) et le chiffrement par bloc (B2) du dispositif de chiffrement (20) sont configurés pour utiliser des rondes d'un même chiffrement par blocs prédéterminé.

2. Système selon la revendication 1, dans lequel, dans le dispositif de déchiffrement (40), les moyens pour réaliser la fonction de hachage (B1) et le chiffrement par blocs (B2) sont agencés en parallèle.

3. Système selon la revendication 1, dans lequel le chiffrement par blocs prédéterminé a un nombre par défaut de *n* rondes ; la fonction de hachage étant agencée de manière à utiliser *k* rondes du chiffrement par blocs prédéterminé, dans lequel *1<=k<n,* et dans lequel le chiffrement par blocs du dispositif de chiffrement utilise *n-k* rondes du chiffrement par blocs prédéterminé.

4. Système selon la revendication 3, dans lequel *k>*=*3* et *n-k>*=*3.*

5. Système selon la revendication 3, dans lequel *n*=*k.*

6. Système selon la revendication 1, dans lequel le mot de données comporte une pluralité de composantes, le système fonctionnant pour mettre à jour une composante du mot de données (D) en le remplaçant par une nouvelle valeur de composante de la manière suivante :
- le dispositif de lecture (50) étant agencé de manière à lire un mot chiffré (D') à partir d'une mémoire (60) à un emplacement identifié par une adresse (A) associée avec le mot de données (D) ;
- les moyens pour réaliser une fonction de hachage (B1) étant agencés de manière à convertir l'adresse associée (A) en une adresse hachée ;
- le dispositif de chiffrement par blocs du dispositif de déchiffrement (20) étant agencé de manière à déchiffrer le mot chiffré (D') ;
- un dispositif de mise à jour de composante étant agencé de manière à combiner la nouvelle valeur de composante avec le mot chiffré déchiffré identifié par l'adresse hachée, formant une combinaison mot/adresse hachée, combinée et mise à jour ; et
- l'utilisation du chiffrement par bloc (B2) du dispositif de chiffrement (20) étant agencée de manière à chiffrer la combinaison mot/adresse hachée, combinée et mise à jour en un mot chiffré mis à jour.

7. Dispositif de chiffrement (20) pour une utilisation dans un système de stockage de mots de données sous une forme chiffrée dans une mémoire (60) selon la revendication 1, dans lequel chaque mot de données est identifié par une adresse associée respective, le dispositif de chiffrement comprenant :
- des moyens pour réaliser une fonction de hachage (B1) pour convertir une adresse (A) associée à un mot de données (D) en une adresse hachée,
- un combineur (24) pour combiner le mot de données (D) avec l'adresse hachée, et
- un dispositif de chiffrement par blocs (B2) pour chiffrer la combinaison mot/adresse hachée en un mot chiffré (D') ;
dans lequel les moyens pour réaliser une fonction de hachage (B1) et le chiffrement par bloc (B2) sont configurés pour utiliser des rondes d'un même chiffrement par blocs prédéterminé.

8. Dispositif de déchiffrement (40) pour une utilisation dans un système dans lequel les mots de données sont stockés sous une forme chiffrée dans une mémoire (60) selon la revendication 1, dans lequel chaque mot de données est identifié par une adresse associée respective, le dispositif de déchiffrement comprenant :
- des moyens pour réaliser une fonction de hachage (B1) pour convertir une adresse (A) associée à un mot de données dans la mémoire en une adresse hachée ;
- un chiffrement par blocs (B2inv) pour déchiffrer un mot chiffré (D') qui a été lu à partir de la mémoire (60) à un emplacement identifié par l'adresse associée (A) ; et
- un décomposeur (44) pour récupérer un mot de données en clair (D) en combinant le mot chiffré déchiffré avec l'adresse hachée,
dans lequel les moyens pour réaliser une fonction de hachage (B1) et le chiffrement par bloc (B2inv) sont configurés pour utiliser des rondes d'un même dispositif de chiffrement par blocs prédéterminé.

9. Procédé de chiffrement de mots de données stockés dans une mémoire (60) sous une forme chiffrée, dans lequel chaque mot de données est identifié par une adresse associée respective, le procédé comprenant :
- l'utilisation d'une fonction de hachage (B1) pour convertir une adresse (A) associée à un mot de données (D) en une adresse hachée,
- la combinaison du mot de données (D) avec l'adresse hachée, et
- l'utilisation d'un chiffrement par blocs (B2) pour chiffrer la combinaison mot/adresse hachée en un mot chiffré (D') en vue de son stockage ultérieur dans la mémoire (60) ;
dans lequel la fonction de hachage (B1) et le chiffrement par bloc (B2) utilisent des rondes d'un même chiffrement par blocs prédéterminé.

10. Procédé de déchiffrement de mots de données stockés dans une mémoire (60) sous une forme chiffrée, dans lequel chaque mot de données est identifié par une adresse associée respective, le procédé comprenant :
- l'utilisation d'une fonction de hachage (B1) pour convertir une adresse (A) associée à un mot de données chiffré (D') stocké dans la mémoire en une adresse hachée ;
- l'utilisation d'un chiffrement par blocs (B2inv) pour déchiffrer le mot de données chiffré qui a été lu à partir de la mémoire à un emplacement identifié par l'adresse associée (A) en une forme intermédiaire ; et
- la récupération d'un mot de données en clair (D) par combinaison de la forme intermédiaire avec l'adresse hachée,
dans lequel la fonction de hachage (B1) et le chiffrement par bloc (B2inv) utilisent des rondes d'un même chiffrement par blocs prédéterminé.

11. Produit de programme informatique dans lequel le produit de programme fonctionne de manière à faire exécuter par un processeur le procédé de la revendication 9.

12. Produit de programme informatique dans lequel le produit de programme fonctionne de manière à faire exécuter par un processeur le procédé de la revendication 10.
